Europäisches Patentamt

European Patent Office

Office européen des brevets

(19)

(11) Numéro de publication: **0 276 584**

**A1**

(12) # DEMANDE DE BREVET EUROPEEN

(21) Numéro de dépôt: 87400195.1

(22) Date de dépôt: **29.01.87**

(51) Int. Cl.⁴: **B32B 25/04** , F16L 59/14 , E04B 1/84 , E04B 1/82 , B60R 13/08 , B61D 17/20 , B62D 47/02

(43) Date de publication de la demande:
**03.08.88 Bulletin 88/31**

(84) Etats contractants désignés:
**AT BE DE ES FR GB IT NL SE**

(71) Demandeur: **Caoutchouc Manufacturé et Plastiques Société Anonyme dite:**
**143, rue Yves-le-Coz B.P. 554**
**F-78005 Versailles Cedex(FR)**

(72) Inventeur: **Bechu, Jean Pierre**
**"LES POISSONS" 20 Ter, rue de Bezons**
**F-92400 Courbevoie(FR)**
Inventeur: **Champleboux, Jacques Joseph**
**36, rue de Trémonteix**
**F-63000 Clermont Ferrand(FR)**

(54) **Structure composite multicouche souple d'isolation phonique et thermique pour structures autoportantes et ses applications.**

(57) Structure composite multicouche d'élastomères compacts et cellulaires pour isolation phonique et thermique, constituée par une alternance d'au moins trois couches de matériaux élastomériques, caractérisée en ce que le matériau cellulaire (2) possède une masse spécifique inférieure ou égale à 200 Kg/m³ et un module sous compression de 50 % au moins égal à 0,1 Mpa et que l'ensemble dudit composite est déformable élastiquement.

FIG.1a

FIG.1b

FIG.1c

EP 0 276 584 A1

## STRUCTURE COMPOSITE MULTICOUCHE SOUPLE D'ISOLATION PHONIQUE ET THERMIQUE POUR STRUCTURES AUTOPORTANTES ET SES APPLICATIONS

L'invention concerne les domaines tels que, par exemple, le bâtiment, les transports, les structures d'abri de matériel, dans lesquels une protection contre le bruit et les variations de température est requise.

Il existe des structures composites, à base de matériaux compacts et cellulaires, qui assurent, en général, l'une ou l'autre des fonctions d'isolation phonique ou thermique ; le brevet FR 2517728 décrit un composite multicouche constitué d'un polymère expansé collé à une couche intermédiaire élastique à base de bitume, renforcée sur ses deux faces par des fibres ou des mats de verre, et d'une couche de bitume élastique comportant une charge minérale dure. Ce matériau a pour avantage un bon effet d'amortissement sonore mais ne revendique pas d'effet d'isolation thermique. Le brevet FR 2101078 de l'Air Liquide, décrit, lui, un composite multicouche d'isolation thermique comportant une mousse de polychlorure de vinyle et du polystyrène expansé posé en compression pour absorber les variations de dimensions dues à la dilatation thermique. Un tel matériau -très efficace pour l'isolation à basse température-présente l'avantage de la légèreté, mais il est rigide, donc non élastiquement déformable et n'assure pas d'atténuation acoustique.

On connaît, aussi, des composites qui assurent, à la fois, l'isolation thermique et acoustique. C'est le cas de l'assemblage décrit dans le brevet US 3911190 de Monsanto qui compte une feuille de matériau thermoplastique collée à une couche de caoutchouc à base de nitrile, elle même collée à un matériau cellulaire, généralement à base de polyuréthanne, dont les cellules sont remplies d'un gaz halogéné. Ce matériau offre des avantages de légèreté, d'atténuation des sons et d'isolation thermique certains, mais il n'est pas élastiquement déformable et, de part sa nature, il ne permet pas la réalisation de structures autoportantes.

L'analyse de l'art antérieur montre qu'un composite qui présente, simultanément, les caractères d'isolation phonique et thermique, de légèreté, de déformabilité élastique sous contrainte et d'autoportance n'est pas connu.

Le composite objet de l'invention est constitué d'un assemblage d'élastomères compacts et cellulaires qui confère audit composite la possibilité de se déformer, d'une manière homothétique, dans son ensemble, et qui permet, grâce à l'effet de poutre assuré par le matériau cellulaire lié aux couches de matériaux compacts adjacentes, d'assurer une autoportance des structures réalisées à partir dudit composite.

Le composite est constitué de couches successives comprenant les éléments suivants :

1°) une couche en élastomère compact qui assure les fonctions étanchéité et protection contre les intempéries et les agents atmosphériques.

2°) une (ou plusieurs) couche(s) d'un matériau cellulaire très déformable de manière élastiquement reversible mais de module élevé, assurant la légèreté du composite et les fonctions d'isolation phonique et thermique ainsi que le caractère autoportant de la paroi en maintenant constant, y compris sous déformation, l'écartement des autres éléments constitutifs du composite.

3°) une couche en élastomère compact, éventuellement renforcée de nappes de textiles à haut module ou de cables métalliques assurant une protection contre le vandalisme et contre les chocs.

Les caractéristiques et variantes de l'invention seront mieux comprises à la lecture de la description ci-après et en se référant aux dessins, sur lesquels :

- la figure 1 représente différentes variables de composition du composite multicouche selon l'invention,

- la figure 2 illustre une application dudit matériau composite.

- la figure 3 schématise le raccordement d'une paroi réalisée à partir du composite multicouche sur une bride.

- les figures 4 et 5 décrivent le comportement acoustique d'une feuille de mélange à base de caoutchouc renforcé ou non et de composites multicouches de différentes structures.

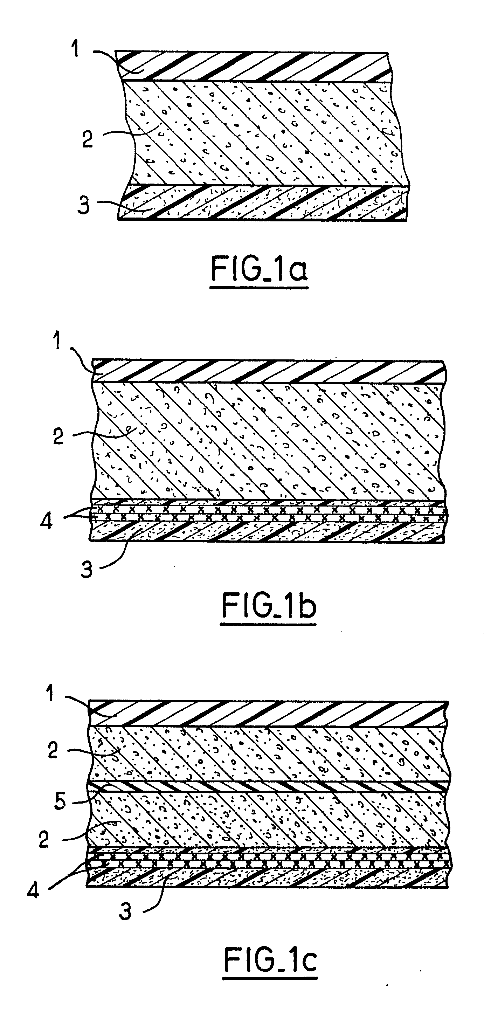

La figure 1 illustre différentes associations des couches constitutives du composite.

Sur la vue 1a, le composite, objet de l'invention, est constitué :

- d'une couche (1), en mélange compact à base d'élastomère, de préférence à base de polychloroprène pour assurer la protection contre le feu,

- d'une couche intermédiaire (2) en matériau cellulaire élastiquement déformable de masse spécifique au plus égale à 200 kg/m³ et, de préférence comprise entre 70 et 100 kg/m³ et de module élastique en compression élevé, c'est à dire au moins égal à 0,10 MPa sous déformation de 50 %, préférentiellement réalisé par expansion d'un mélange à base de terpolymère d'éthylène, de propylène et d'un diène, réticulé,

- et enfin d'une couche (3) en mélange élastomérique compact qui peut, éventuellement, mais non obligatoirement, être de même nature que le mélange de la couche (1), et dont la formulation peut être conçue de manière à assurer une bonne résistance au feu.

Le tableau ci-dessous indique, à titre d'exemple non limitatif, les propriétés physiques (masse volumique), mécaniques (rigidités et modules en compression et en traction, résistance et allongement à la rupture ainsi que résistance au déchirement) et thermique (conductibilité) - mesurées selon les normes françaises dont les références sont indiquées - d'un matériau cellulaire qui peut être utilisé pour la réalisation de la couche intermédiaire (2) du composite multicouche.

| Propriété | Méthode d'essai | Résultats | |
|---|---|---|---|
| Masse volumique apparente | NFT.56107 | 0,08 à 0,09 g/cm3 | |
| Rigidité en compression | NTF.56110 | 1er cycle | 5ème cycle |
| Module à 25 % | | 0,1 MPa | 0,03 MPa |
| Module à 50 % | | 0,2 MPa | 0,13 MPa |
| Module à 65 % | | 0,3 MPa | 0,25 MPa |
| Rigidité en traction | NFT.56108 | | |
| Module à 20 % | | 0,5 à 1,5 Mpa | |
| Module à 50 % | | 1,0 à 2,5 MPa | |
| Module à 100 % | | 1,5 à 3,0 MPa | |
| Résistance à la rupture | | 2,0 à 3,0 MPa | |
| Allongement à la rupture | | 130 à 200 % | |
| Résistance au déchirement | NFT.56109 | | |
| éprouvette pantalon | | 0,7 à 1,7  ) daN/cm | |
| éprouvette angle droit | | 1,5 à 2,5  ) | |
| Conductibilité thermique | | environ 0,020 Cal/m/h/°C | |

La vue 1b ne se différencie de la précédente que par l'intégration, au sein de la couche (3) d'une (ou plusieurs) nappes de renforcement (4) textiles ou métalliques, qui assurent, en outre, une protection contre le vandalisme.

La vue 1c représente la constitution d'un composite à 5 couches alternées d'élastomères compacts et cellulaires. Il comporte d'un bord à l'autre, une couche en élastomère compact (1) et une couche en élastomère cellulaire (2), identiques à celles décrites dans les vues 1a et 1b, puis une couche (5) en mélange à base d'élastomère compact, afin de multiplier le nombre d'interfaces de matériaux différents, ce qui est de nature à accroître l'isolation phonique en réduisant les possibilités de transmission des sons.

Viennent ensuite une seconde couche d'élastomère cellulaire (2) et une nouvelle couche (3) de mélange compact à base d'élastomère qui peut éventuellement comporter des éléments de renforcement textiles ou métalliques (4). Les élément (2), (3) et (4) constitutifs du composite étant identiques à ceux décrits dans la vue 1b.

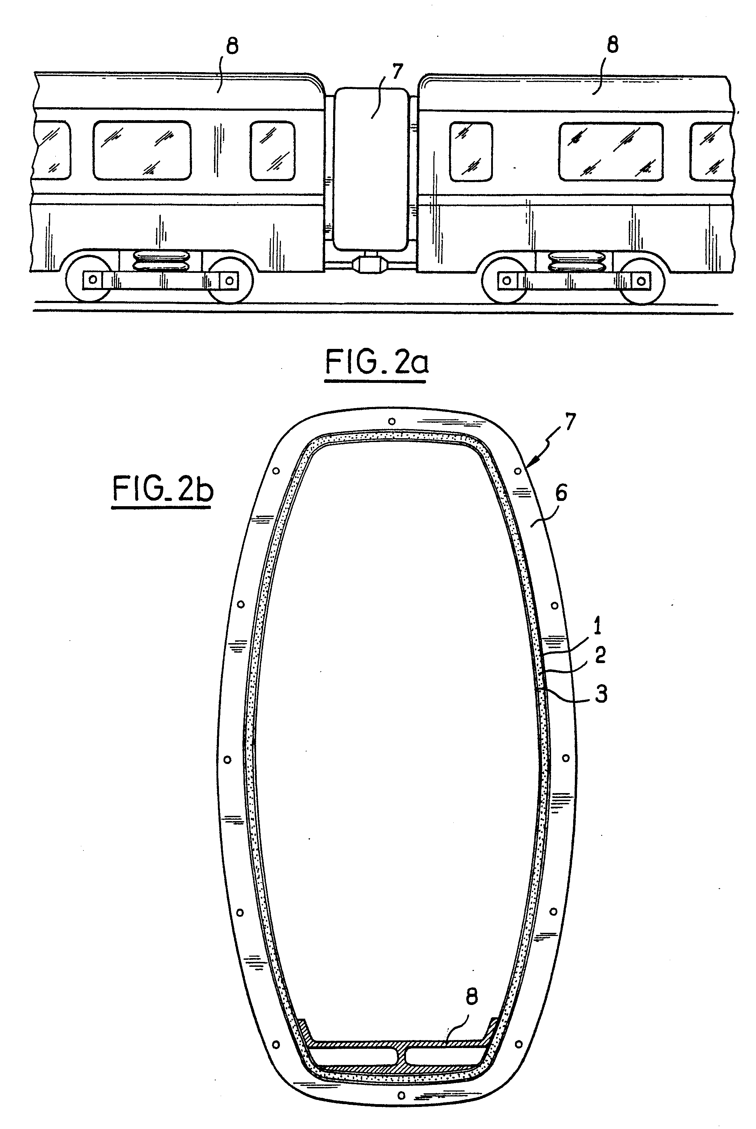

La figure 2 illustre une application possible du composite multicouche à la réalisation d'un tunnel d'intercirculation monobloc (7 ) pour véhicules ferroviaires (8). L'application en serait la même sur des voitures de métro ou des véhicules routiers tels que des tramways ou autobus articulés.

La vue 2a montre le tunnel d'intercirculation monobloc (7) permettant le passage du public d'un véhicule à l'autre, en protégeant les voyageurs.

La vue 2b montre la coupe orthogonale à l'axe des véhicules d'un tel tunnel d'intercirculation monté sur une bride (6) destinée à la fixation du tunnel sur la face frontale d'un véhicule.

La structure du composite comporte de l'extérieur vers l'intérieur du tunnel, la couche compacte (1) de protection contre les intempéries, la couche cellulaire (2) formant entretoise et écran acoustique et thermique puis la couche interne compacte (3) pour la protection contre le feu, contre le vandalisme et contre les chocs. Un plancher déformable (9) est ajouté au tunnel pour assurer la continuité de niveau avec le sol des voitures et accroître l'isolation sonore dans la direction du train de roulement.

Dans des applications (non représentées) de même nature, le composite multicouche offre de nombreux avantages pour la 30 réalisation d'éléments déformables de passerelles mobiles d'accès aux avions depuis le terminal de l'aéroport, ou d'accès aux navires depuis un quai d'embarquement.

L'autoportance, la déformabilité élastique et la légèreté du composite permettent une réduction de l'énergie nécessaire à la déformation desdites passerelles que ce soit dans les utilisations ferroviaires, dans les utilisations de transport urbain, dans les utilisations aéroportuaires ou dans les utilisations maritimes. De plus, la résistance aux intempéries et au vandalisme sont des facteurs appréciés dans ce type d'applications.

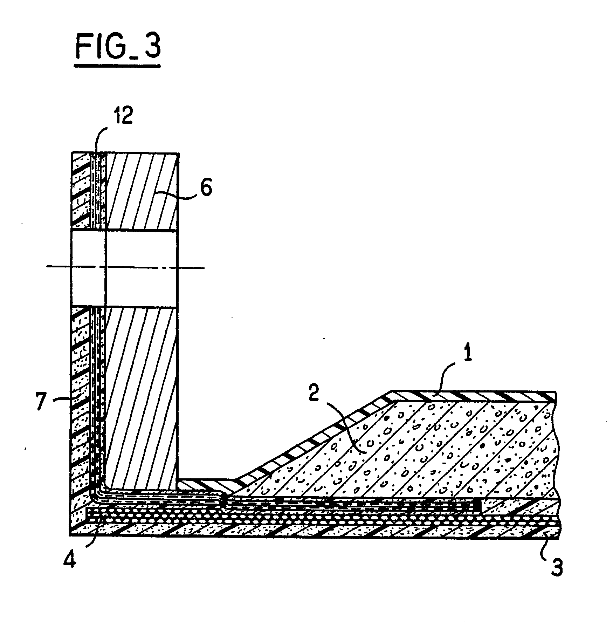

La figure 3 est la coupe longitudinale d'une paroi réalisée à partir du composite multicouche. Elle explicite une des modalités de raccordement des éléments de la paroi sur une bride rigide (6), métallique ou réalisée à partir de composites rigides. On y distingue la couche (1) en mélange à base d'élastomère compact, la couche (2) en matériau élastique cellulaire et la couche (3) qui se prolonge sous la bride dans la zone (7). Sur cette figure, la couche (3) comporte un reforcement textile ou métallique (4). Une nappe de cables textiles ou métalliques (12), dite nappe de raccordement, assure une liaison progressive, par recouvrement de la nappe de renforcement (4), entre la paroi et la bride de fixation (6).

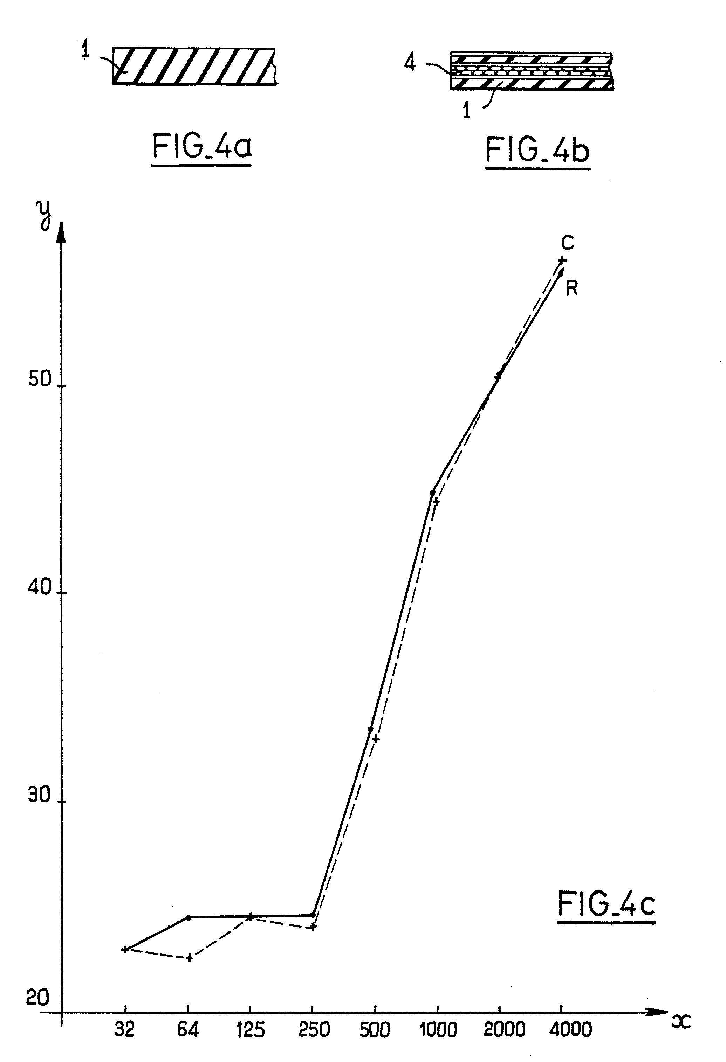

La figure 4 illustre, sous forme graphique, les résultats obtenus dans un essai d'atténuation sonore en fonction de la fréquence, sur une feuille à base de mélange élastomérique (1 ) compact et sur une feuille de même mélange (1) renforcé de cables métalliques (4), les deux échantillons présentant la même épaisseur.

Les vues 4a et 4b montrent la constitution des échantillons, celui de la vue 4a correspondant au graphique (C) et celui de la vue 4b au graphique (R) de la vue 4c dans laquelle l'axe des abscisses (X) représente les fréquences des octaves de mesure et l'axe des ordonnées (y) l'atténuation sonore en décibels.

Les graphiques (C) et (R) correspondent aux ·valeurs expérimentales mesurées dans l'essai d'atténuation sonore décrit ci-dessus et consignées, pour chacun des échantillons soumis à l'essai, dans le tableau ci-après :

| Fréquence des octaves de mesure | Atténuation sonore décibels | | Différence |
|---|---|---|---|
| | Matériau 4a | Composite 4b | |
| 32 | 23,0 | 23,0 | 0 |
| 64 | 22,5 | 24,5 | + 2 |
| 125 | 24,5 | 24,5 | 0 |
| 250 | 24,0 | 24,5 | + 0,5 |
| 500 | 33,0 | 33,5 | + 0,5 |
| 1000 | 44,5 | 45,0 | + 0,5 |
| 2000 | 50,5 | 50,5 | 0 |
| 4000 | 56,0 | 55,5 | − 0,5 |

L'analyse de ces graphiques (C) et (R) permet de déduire que l'inter-position dans la couche de mélange compact 1 d'un élément de renforcement (4) modifie peu l'effet obtenu, les différences d'atténuation sonore étant comprises entre -0,5 et + 2 décibels.

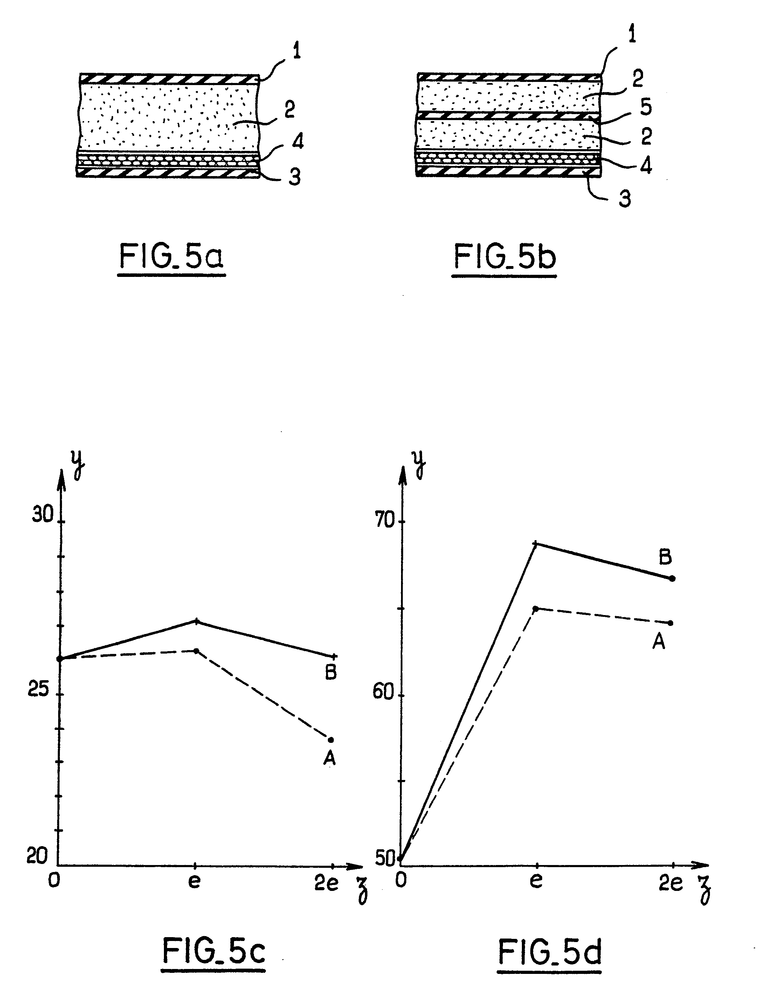

La figure 5 illustre, sous forme graphique, les résultats obtenus, dans les mêmes conditions d'essai que précédemment, sur le composite multicouche.

Les vues 5a et 5b montrent la structure des composites (correspondant respectivement aux graphiques A et B des vues 5c et 5d) constitués d'une 1ère couche à base d'élastomère compact (1), d'une couche de matériau cellulaire (2), d'une couche de mélange à base d'élastomère compact (3) renforcé de cables métalliques (4), et, pour le composite de la vue 5b d'une couche d'élastomère compact interposée à mi-épaisseur du matériau cellulaire (5).

Sur les vues 5c et 5d, l'axe des abscisses (z) représente l'épaisseur (e) de la couche de matériau cellulaire (2) de l'échantillon (A) ou (B) et l'axe des ordonnées (y) représente l'atténuation sonore, en décibels.

La vue 5c est relative aux mesures aux basses et moyennes fréquences (jusqu'à 500 Herz), alors que la vue 5d se rapporte aux mesures aux fréquences élevées (de 500 à 4000 Herz).

Les graphiques des vues 5c et 5d correspondent aux valeurs expérimentales indiquées dans le tableau ci-après :

| Matériau en essai | Epaisseur de cellulaire (mm) | Atténuation sonore (décibels | | | |
|---|---|---|---|---|---|
| | | Basse et moyenne fréquences | | Haute fréquence | |
| | | valeur | écart par rapport au témoin | valeur | écart par rapport au témoin |
| Témoin 4a | 0 | 26,1 | – | 48,7 | – |
| Composite 5a | 23 | 26,3 | + 0,2 | 65,0 | + 16,3 |
| Composite 5a | 46 | 23,6 | – 2,5 | 64,2 | + 15,5 |
| Témoin 4b | 0 | 26,5 | – | 50,3 | – |
| Composite 5b | 11 + 11 | 27,1 | + 0,6 | 68,7 | + 18,4 |
| Composite 5b | 23 + 23 | 26,2 | – 0,3 | 66,7 | + 16,4 |

L'analyse de ces graphiques montre que :

1°) le cellulaire (2) accroît l'atténuation sonore aux fréquences élevées, puisque la différence par rapport au témoin est, en moyenne, de 15,9 pour le composite correspondant à la vue 5a et de 17,4 pour celui correspondant à la vue 5b.

2°) l'augmentation de l'épaisseur de cellulaire (2) apporte peu d'effet favorable : les différences d'atténuation sonore entre les composites correspondants à la vue 5a ou à la vue 5b mais d'épaisseurs différentes ne sont, respectivement que de 0,8 et 2 décibels.

3°) la multiplication des interfaces entre couches compactes et cellulaires, par interposition d'une couche (5), améliore peu l'effet d'atténuation sonore aux hautes fréquences, puisque les différences entre les composites correspondants aux vues 4a et 4b ou 5a et 5b et ayant, pour ces derniers, une épaisseur de 23 ou de 46 millimètres de cellulaire, sont respectivement de 1,6 de 2,1 et de 0,9 décibels.

Une des méthodes de réalisation du composite consiste, à partir des différentes couches déjà vulcanisées, à les assembler dans un moule et à les soumettre à une opération de traitement thermique sous pression. Des structures de révolution sont obtenues par pose successive des éléments constitutifs sur un mandrin de forme appropriée, suivie d'un sanglage qui les maintient en place et d'un traitement thermique.

En conclusion, l'invention décrit un matériau multicouche pour réalisation de structures autoportantes, présentant simultanément des propriétés d'isolation phonique et thermique, des cractéristiques élastiques qui lui permettent de reprendre ses dimensions initiales après déformation, une excellente tenue au déchirement et une bonne résistance au feu, aux hydrocarbures et aux corps gras, alliées à la légèreté et au caractère autoportant.

Un tel composite se prête à la réalisation de nombreux articles industriels qui utilisent tout ou partie de ses propriétés.

C'est ainsi que la quasi totalité de ces caractéristiques sont mises à profit dans la réalisation de tunnels d'intercirculation pour véhicules ferroviaires ou routiers qui nécessitent une isolation phonique contre les bruits de roulement, une isolation thermique pour maintenir constante la température des véhicules climatisés, une propection contre les intempéries et les agents atmosphériques, une protection contre les projections d'huile et de corps gras, une protection contre le vandalisme et la dégradation tant par le feu que par des objets coupants, ainsi qu'une excellente tenue mécanique pour résister aux déformations répétées dues aux mouvements des véhicules. Les tunnels d'intercirculation réalisés à partir du composite objet de l'invention sont autoportants ce qui évite l'interposition de structures de maintien et permet ainsi de gagner en poids et en souplesse.

De même, les éléments mobiles de passerelles qui joignent un terminal à un avion ou un bateau nécessitent la conjugaison de toutes les qualités du composite multicouche.

La réalisation de tuyaux pour le transport des hydrocarbures ou du gaz liquéfié, dont la paroi est réalisée à partir du composite multicouche, requiert, essentiellement les propriétés d'isolation thermique, de résistance aux hydrocarbures, de légèreté et de tenue mécanique.

Le composite multicouche est également utilisé pour la réalisation d'éléments mobiles de structures pour abriter des machines. Il protège l'environnement du bruit et des projections d'huiles et de matières grasses et aide à la protection du matériel contre les intempéries et les pouusières atmosphériques.

Les emplois du composite multicouche ne se limitent pas aux cas illustrés ou décrits. De nombreuses autres applications peuvent être trouvées - dans le bâtiment et les travaux publics, en particulier - chaque fois que se présente la nécessité d'allier une isolation phonique et/ou thermique à une haute résistance mécanique.

L'homme de l'art peut, bien entendu, apporter au dispositif décrit précédemment et à ses applications illustrées à titre d'exemples non limitatifs, diverses modifications sans sortir du cadre de l'invention.

## Revendications

1°) Structure composite multicouche d'élastomères compacts et cellulaires pour isolation phonique et thermique, constituée par une alternance d'au moins trois couches de matériaux élastomériques, caractérisée en ce que le matériau cellulaire (2) possède une masse spécifique inférieure ou égale à 200 Kg/m³ et un module sous compression de 50 % au moins égal à 0,1 MPa et que l'ensemble dudit composite est déformable élastiquement.

2°) Structure composite multicouche selon la revendication 1, caractérisée en ce que la masse spécifique du matériau cellulaire (2) est comprise entre 70 et 100 Kg/m³.

3°) Structure composite multicouche selon l'une des revendications 1 ou 2, caractérisée en ca que le matériau cellulaire (2) est produit par l'expansion d'un terpolymère d'éthylène/propylène/diène.

4°) Structure composite multicouche selon l'une des revendications 1 à 3, caractérisée en ce que la composition des mélanges à base d'élastomères compacts des couches (1) et/ou (3) leur confère une bonne résistance au feu.

5°) Structure composite multicouche selon l'une des revendications 1 à 4, caractérisée en ce que l'élastomère utilisé dans les mélanges des couches compactes (1) et/ou (3) est du polychloroprène.

6°) Structure composite multicouche selon l'une des revendications 1 à 5, caractérisée en ce que la couche à base d'élastomère compact (3) est renforcée par au moins une nappe de textiles ou de cables métalliques (4).

7°) Structure composite multicouche selon l'une des revendications 1 à 6, caractérisée en ce qu'au moins une couche à base d'élastomère compact (5) est interposée entre deux couches de matériau cellulaire (2).

8°) Tunnel d'intercirculation entre véhicules ferroviaires ou routiers, monobloc et autoportant, réalisé à partir d'une structure composite multicouche conforme à l'une des revendications 1 à 7.

9°) Eléments déformables de passerelle d'accès d'un terminal à un avion ou à un bateau, réalisés à partir d'une structure composite multicouche conforme à l'une des revendications 1 à 7.

10°) Eléments déformables d'abris de machines bruyantes et/ou polluantes, réalisés à partir d'une structure composite multicouche conforme à l'une des revendications 1 à 7.

11°) Tuyau isolant pour le transport d'hydrocarbures ou de gaz naturel liquéfié, réalisé à partir d'une structure composite multicouche conforme à l'une des revendications 1 à 7.

FIG_1a

FIG_1b

FIG_1c

FIG.2a

FIG.2b

# FIG_3

0 276 584

FIG.4a

FIG.4b

FIG.4c

FIG.5a

FIG.5b

FIG.5c

FIG.5d

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | EP-A-0 206 910 (CAOUTCHOUC MANUFACTURE ET PLASTIQUES) * Revendications 1-9; page 3, ligne 28 - page 6, ligne 9; figures 3a-3c * | 1-8 | B 32 B 25/04 F 16 L 59/14 E 04 B 1/84 E 04 B 1/82 B 60 R 13/08 B 61 D 17/20 B 62 D 47/02 |
| | --- | | |
| A | DE-A- 671 820 (DORNIER-WERKE) * Revendication 1; page 1, ligne 10 - page 2, ligne 52; figures 1,3 * | 1-6 | |
| | --- | | |
| A | FR-A-2 334 042 (GUTEHOFFNUNGSHUTTE) * Revendications 1,3,8,10-13; page 1, ligne 25 - page 3, ligne 29; page 4, ligne 7 - page 5, ligne 18 * | 1-3,6, 11 | |
| | --- | | **DOMAINES TECHNIQUES RECHERCHES (Int. Cl.4)** |
| A | FR-A-2 218 179 (BAYER AG) * Revendications 1,2; page 1, lignes 1-18; page 3, ligne 6 - page 4, ligne 34; exemple 2; figure * | 1,8 | B 32 B F 16 L E 04 B B 60 R B 61 D B 62 D |
| | --- | | |
| E | FR-A-2 589 786 (CAOUTCHOUC MANUFACTURE ET PLASTIQUES) * Revendications 1-11; page 2, ligne 1 - page 5, ligne 6; figures 1a-1c * | 1-11 | |
| | ----- | | |

Le présent rapport de recherche a été établi pour toutes les revendications

| Lieu de la recherche | Date d'achèvement de la recherche | Examinateur |
|---|---|---|
| LA HAYE | 07-09-1987 | BLASBAND I. |

OEB Form 1503 03 82